# EUROPEAN PATENT APPLICATION

(11) **EP 4 847 677 A1**
(43) Date of publication of application: **02.12.2026**
(21) Application number: 26179986.0
(22) Date of filing: 20.05.2026
(51) Int. Cl.: D04H 3/007, B32B 5/02, B32B 5/08, B32B 5/26, B32B 27/32, D01F 8/06, D04H 3/14, D04H 3/018, D04H 3/147, D04H 13/00

(54) **A NON-SLIP SEPARATOR AND A PRODUCTION METHOD THEREOF**

(30) Priority: 27.05.2025 TR 2025006873
(71) Applicant: Karsli, Levent, Gaziantep 27620 (TR)
(72) Inventor: Karsli, Levent, Gaziantep 27620 (TR)
(74) Representative: Cayli, Hülya

(57) **Abstract**

The present invention relates to a non-slip separator for providing non-slip property between products in the logistics applications, and to a production method for said separator. Said separator comprises at least a first layer (1) of a spunbond structure that comprises copolymer-containing filaments. Said production method comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the separator.

## Description

### Technical Field

The present invention relates to a separator to be used in logistics applications to prevent transported and stored products from sliding over each other and on pallets, and to a production method for said separator.

### Background of the Invention

In the logistics sector, products to be transported or stored may be stacked on each other and/or on pellets being inside the boxes, packages, or as single items. Especially when the surfaces of boxes, packages, or single products are smooth, these structures may slide over each other or off the pallet. This not only cause damage to the products, but also cause harm to nearby users. Therefore, in order to ensure both product and user safety, it is necessary to prevent these products from sliding over each other and off the pallet.

In prior art applications, adhesive containing coatings, non-slip paper separators, or coatings applied to the surface of boxes/packages are used for providing non-slip property between said structures. However, adhesive coatings and coatings applied to the surface of boxes/packages can collect dust and dirt due to their adhesive nature, lose their adhesive properties over time, cause adhesive contamination to surrounding surfaces and users, their non-slip properties may decrease due to temperature changes, they are difficult to recycle, and they can cause product contamination, resulting in violations of chemical regulations. Non-slip paper separators, on the other hand, cannot be used multiple times because they are easily damaged. Consequently, their long-term operating costs are high. Therefore, there is a need for a separator structure that eliminates these drawbacks.

### Brief Description of the Invention

The present invention discloses a separator for providing non-slip property between products in the logistics applications, and a production method for said separator. Said separator comprises at least a first layer (1) of a spunbond structure comprising copolymer-containing filaments. Said production method comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the separator.

In the separator according to the present invention, the spunbond structure of the first layer (1) allows the separator to be manufactured easily. Furthermore, the use of copolymer-containing filaments in the first layer (1) provides the desired non-slip effect. In addition, when the raw material forming the copolymer-containing filaments is selected as a polyolefin such as propylene and ethylene, the recyclable nature of this raw material also renders the separator recyclable, thereby making the separator environmentally friendly and sustainable. Moreover, the use of said raw material gives the separator high mechanical and chemical resistance while maintaining a relatively low weight. Said separator can also be manufactured using automation applications, thus ensuring that the manufacturing process is carried out quickly and at a lower cost.

### Object of the Invention

An object of the present invention is to provide a separator for providing non-slip property between products in the logistics applications, and a production method for said separator.

Another object of the present invention is to provide a recyclable and environmentally friendly separator, and a production method for said separator.

Yet another object of the present invention is to provide a low-cost separator, and a production method for said separator.

Still another object of the present invention is to provide a separator with high mechanical and chemical resistance, and a production method for said separator.

A further object of the present invention is to provide a separator with air permeability, and a production method for said separator.

### Description of the Drawings

Exemplary embodiments of the separator according to the present invention are illustrated in the attached drawings, in which:
Figures 1a-1f show cross-sectional and perspective views of different filaments suitable for use in the production of the separator according to the invention.
Figure 2 shows an exploded view of the separator of the invention in a multilayer embodiment.
Figure 3 shows a side cross-sectional view of the separator of the invention in a multilayer embodiment.

All the parts illustrated in figures are individually assigned a reference numeral and the corresponding terms of these numbers are listed below:

| | |
|---|---|
| First resin | (R1) |
| Second resin | (R2) |
| First layer | (1) |
| Second layer | (2) |
| Third layer | (3) |

### Detailed Description of the Invention

In the transportation and storage applications, products may be stacked on each other and/or on pellets being inside the boxes, packages, or as single items. Especially when these products are stacked in large quantities, there is a risk of damage to the products as they slide off each other or off the pallet, which may also cause environmental damage. For this reason, the present invention provides a separator for providing non-slip property between products in the logistics applications, as well as a production method for said separator.

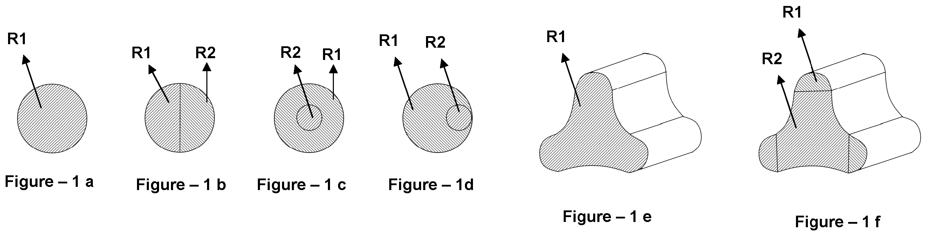

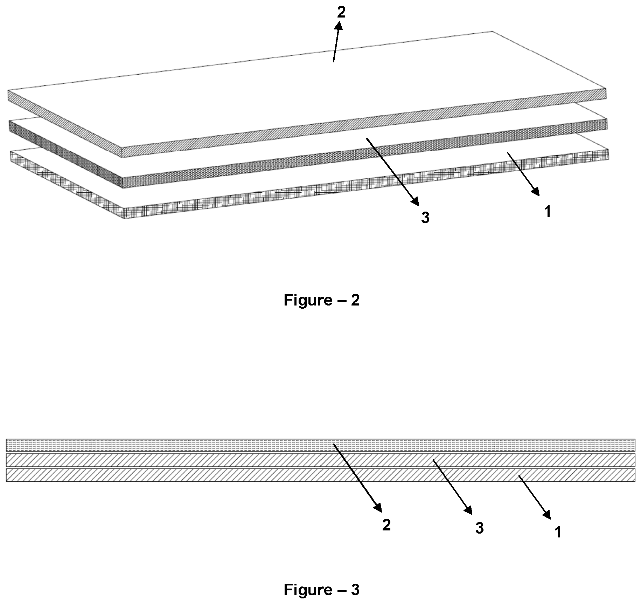

The separator according to the present invention, as illustrated in Figures 1-3, which provides non-slip property between products in the logistics applications comprises at least a first layer (1) of a spunbond structure comprising copolymer-containing filaments. The production method of said separator comprises the steps of: obtaining at least one copolymer raw material; converting the obtained raw material into copolymer-containing filaments by a spunbond process; forming a web structure by laying the copolymer-containing filaments onto a conveyor belt; and passing the formed web between two heated metal rollers so as to bond the free filaments to one another and obtain at least a first layer (1) of the separator.

In a preferred embodiment of the invention, said copolymer-containing filaments comprise propylene and ethylene. The copolymer-containing filaments may comprise at least a first resin (R1) comprising propylene and ethylene (for example, in a cylindrical monofilament structure as illustrated in Figure 1a or in a trilobal monofilament structure as illustrated in Figure 1e), or may comprise at least a first resin (R1) comprising propylene and ethylene together with at least a second resin (R2) comprising polypropylene (PP). In an embodiment where the copolymer-containing filaments comprise the first resin (R1) and the second resin (R2), said copolymer-containing filaments may have a side-by-side (s/s) cross-section as shown in Figure 1b, a core/sheath (c/s) cross-section as shown in Figure 1c, an eccentric core/sheath (c/s) cross-section as shown in Figure 1d, or a trilobal cross-section as shown in Figure 1f. In the case of core/sheath (c/s) filaments, the core portion comprises the second resin (R2) and the sheath portion comprises the first resin (R1). Similarly, in the case of eccentric core/sheath (c/s) filaments, the core portion comprises the second resin (R2) and the sheath portion comprises the first resin (R1). In the case of trilobal filaments, the central portion of the filament comprises the second resin (R2), while the lobe tips comprise the first resin (R1). In the case of core/sheath (c/s) filaments or the eccentric core/sheath (c/s) filaments, the weight ratio of the sheath relative to the filament may be in the range of 5-50%.

In another preferred embodiment of the invention, said separator comprises at least a second layer (2) located on the first layer (1). Similar to said first layer (1), said second layer (2) preferably comprises copolymer-containing filaments. In another preferred embodiment, said separator may further comprise at least a third layer (3) located between the first layer (1) and the second layer (2). Said third layer (3) preferably comprises polypropylene containing filaments. Thanks to the fact that the said third layer (3) contains only polypropylene filament, the separator can be manufactures faster. The copolymer-containing filaments used in the first layer (1) and the second layer (2) may be the same or different (for example, in terms of polymer ratios or filament cross-sectional structures). Said third layer (3) may have a spunbond structure or a meltblown structure. In cases where multiple third layers (3) are used, said third layers (3) may differ from one another. Thus, the separator may have layer configurations arranged from top to bottom as S, SS, SSS, SSSS, SMS, SMMS, SSMMS, SSMMSS or other configurations (where S denotes a spunbond layer and M denotes a meltblown layer).

In another preferred embodiment of the invention, said production method comprises at least one extrusion step prior to the step of converting the obtained raw material into copolymer-containing filaments by a spunbond process. Said extrusion step comprises the steps of melting the obtained raw material, mixing the molten raw material, and filtering the mixture. In this embodiment, the temperature of said melting process is preferably in the range of 210-270°C.

In another preferred embodiment of the invention, in the step of passing the formed web between two heated metal rollers so as to bond the free filaments to one another and obtain at least a first layer (1) of the separator, a temperature of said metal rollers is in the range of 70-180°C. Furthermore, a pressure value applied to the web by means of said metal rollers is in the range of 50-150 daN/cm.

In another preferred embodiment of the invention, said production method comprises a step of mixing the obtained raw material with a dye (for example, a masterbatch) prior to the step of converting the obtained raw material into copolymer-containing filaments by a spunbond process. Thus, the resultant separator can be provided in a desired color.

In an exemplary embodiment of the invention, the first resin (R1) is obtained from a raw material source and subjected to an extrusion process. The first resin (R1) and/or the second resin (R2) are then subjected to a spunbond process to form the copolymer-containing filaments. Upon deposition of the copolymer-containing filaments, a web structure is formed, which is subsequently passed between heated rollers (i.e. a calendering process) to obtain a first layer (1). In this calendering process, at least one of the rollers may be a patterned roller. In this way, one surface of the first layer (1) is enabled to have a desired texture. The first layer (1) thus obtained may be used directly as a separator (for example, being located between stacked products or between products and pellets), or a second layer (2) and a third layer (3) may be incorporated onto the first layer (1). Said separator may be used to prevent slippage between products and between products and pallets during storage and transportation of various products such as detergent boxes, cardboard boxes, beverage cans, canned goods boxes, e-commerce shipments, diaper boxes, sanitary pad boxes, adult care packages, nonwoven rolls, food sacks (such as flour, sugar, and legumes), dairy product packages, frozen food boxes, beverage boxes, ceramic tiles, glass panels, porcelain products, fertilizer sacks, chemical raw material bags, paint cans, TV boxes, monitor boxes, white goods packaging, furniture and wooden products. This separator can also be used as an inner box divider, tray cover, tablecloth, or protective cover. In the separator according to the present invention, the spunbond structure of the first layer (1) allows the separator to be manufactured easily. Furthermore, the use of copolymer-containing filaments in the first layer (1) provides the desired non-slip effect. In addition, when the raw material forming the copolymer-containing filaments is selected as a polyolefin such as propylene and ethylene, the recyclable nature of this raw material also renders the separator recyclable, thereby making the separator environmentally friendly and sustainable. Moreover, the use of said raw material gives the separator high mechanical and chemical resistance while maintaining a relatively low weight. Said separator can also be manufactured using automation applications, thus ensuring that the manufacturing process is carried out quickly and at a lower cost.

## Claims

1. A separator for providing non-slip property between products in the logistics applications, **characterized by** comprising at least a first layer (1) of a spunbond structure that comprises copolymer-containing filaments.

2. A separator according to claim 1, **characterized in that** said copolymer-containing filaments comprise propylene and ethylene.

3. A separator according to claim 1 or 2, **characterized in that** the copolymer-containing filaments comprise at least a first resin (R1) comprising propylene and ethylene.

4. A separator according to claim 1 or 2, **characterized in that** the copolymer-containing filaments comprise at least a first resin (R1) comprising propylene and ethylene; and at least a second resin (R2) comprising polypropylene.

5. A separator according to claim 4, **characterized in that** said copolymer-containing filaments have a side-by-side filament cross-section.

6. A separator according to claim 4, **characterized in that** said copolymer-containing filaments have a core/sheath filament cross-section or an eccentric core/sheath filament cross-section.

7. A separator according to claim 6, **characterized in that** the core portion comprises the second resin (R2) and the sheath portion comprises the first resin (R1).

8. A separator according to claim 6 or 7, **characterized in that** a weight ratio of the sheath relative to the filament is in the range of 5-50%.

9. A separator according to claim 4, **characterized in that** said copolymer-containing filaments have a trilobal filament cross-section.

10. A separator according to any one of the preceding claims, **characterized in that** it comprises at least a second layer (2) located on the first layer (1).

11. A separator according to claim 10, **characterized in that** the second layer (2) comprises copolymer-containing filaments.

12. A separator according to claim 10 or 11, **characterized in that** it comprises at least a third layer (3) located between the first layer (1) and the second layer (2).

13. A separator according to claim 12, **characterized in that** the third layer (3) comprises polypropylene containing filaments.

14. A production method for a separator for providing non-slip property between products in the logistics applications, **characterized by** comprising the steps of:
- obtaining at least one copolymer raw material;
- converting the obtained raw material into copolymer-containing filaments by a spunbond process;
- forming a web structure by laying the copolymer-containing filaments onto a conveyor belt; and
- passing the formed web between two heated metal rollers so as to bond the free filaments to one another and obtain at least a first layer (1) of the separator.
